(19)

Europäisches Patentamt
European Patent Office
Office européen des brevets

(11) **EP 2 104 202 A1**

(12) **EUROPEAN PATENT APPLICATION**

(43) Date of publication:
**23.09.2009 Bulletin 2009/39**

(51) Int Cl.:
*H02K 1/14* (2006.01)  *H02K 3/28* (2006.01)
*H02K 21/14* (2006.01)  *H02K 1/02* (2006.01)

(21) Application number: **08425167.7**

(22) Date of filing: **18.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Phase Motion Control S.r.l.**
**16141 Genova (IT)**

(72) Inventor: **Venturini, Marco**
**16145 Genova (GE) (IT)**

(74) Representative: **Monti, Umberto**
**Via Washington 48**
**20146 Milano (IT)**

(54) **Electric Motor with permanent magnet rotor**

(57) A brushless electric motor comprising a winding arrangement in which the pole number (n) is greater than the slot number (m), with improved torque density and assembly efficiency. The motor consists of a set of teeth (T1,T2,..,Tm) with single coils (D1,D2,..,Dm) wrapped around them, in number (m) smaller than the number (n) of the permanent magnets (M1,M2,..,Mn) on the rotor. A ratio between slot number (m) and pole number (n) is, such as to obtain a maximum EMF.

**Fig. 1**

EP 2 104 202 A1

## Description

The present invention refers to an improved brushless electric motor.
The motor of the present invention is particularly adapted as a servo motor for converting electric power into mechanical power in physical actuators of computer controlled automatic machines.

In the following the invention will be disclosed with reference to an application concerning this particular field, although this is by no means to be meant as limiting the scope of the invention.

Computer controlled automatic machines generally comprise:

a servo motor, typically a brushless electric motor,
a position sensor, often assembled on the motor,
a central controller or control unit, and
a device known as "servo drive" which receives the actuation demands from the central controller, checks the actual position of the actuator through a sensor system, and adjusts the power transferred to the servo motor in order to meet the demands, i.e. execute precisely the actuation required from the control unit.

Conventional brushless motors of this type provide for a multi-phase stator made of a stack of stamped laminations shaped so as to form a plurality of slots in the assembled stator. Windings or coils which overlap several slots are manually or mechanically inserted in the slots or "lap" on them.

In this known arrangement, the wires of the winding (so called magnet wire) is unavoidably inserted in a random manner and the filling factor of the motor slots rarely exceeds 40%.

Moreover, the ends (end portions) of the winding coil, which are magnetically non-active and thus bring about an energy loss, result in being quite long because of the number of slots which are overlapped by the winding.

This conventional design of brushless motors is well known and most of brushless servo motors are realized along this principle. In these motors, assuming a 3-phase operation, the number of stator slots is always an integer multiple of the rotor pole pairs multiplied by the number of motor phases, typically 3, and consequently the minimum number of slots per pole is 3.

EP 1 215 029 in the name of the present Applicant discloses a brushless electric motor in which a single coil embraces a single tooth. In this motor, also known as a "fractional pole pitch" motor, the number of slots per pole is typically less than 3 and close to unity.

In such brushless motor, the ratio m/n where:

m is the number of stator slots (an integer multiple of the number of motor phases, typically 3),
n is the (by definition even) number of rotor poles,

is constrained in this geometry to be between 1 and 2.

Typical designs known in the art provide for 12 slots, 8 poles, 9 slots, 8 poles, 6 slots, 4 poles, and so on.

The advantageous features of this motor are:

1. the overlap of the coil end portions is prevented and each coil can be separately wound and positioned: this allows for a layered winding with an increased copper density, and consequently an improved efficiency and a high power density;
2. because of the shorter coil pitch, the length of the coil ends is reduced thus reducing the motor size and increasing its efficiency.

Although a brushless motor of this design is endowed with several advantages and its application is widespread, a few limitations have recently become of significance, namely:

- accomplishing a layered, ordered single tooth winding with a high copper density is difficult to be achieved on a slotted structure, because a layered winding requires a free space around the winding for the machine to operate and as a matter of fact it requires the capability to wind a single tooth separately;

- although a brushless motor can be manufactured out of several individually wound "teeth" that are then piecewise assembled, this involves expensive steps like stamping a very large number of miniature "tooth" laminations, stacking them into teeth by riveting, welding or interlocking and each tooth has then to be wound and assembled. Clearly, the complexity of this process further increases with a motor having a large tooth number.

As an alternative, a single slotted stator can be used, but the slots must be completely open on the side facing the airgap if a separately-wound layered coil is to be assembled in it. Thus, this simple one-piece stator has the drawback of a significant loss of the field of the magnet portion facing the slot opening.

It is further to be considered that the efficiency of this brushless motor critically depends on the amount of magnetic flux coupled to each winding (so called winding factor). In this design, each coil embraces one tooth so the value of the winding factor depends on how much of each magnet or pole is overlapped by each tooth. Consequently, the common 12 teeth, 8 poles designs have an unfavourable winding factor resulting in lower efficiency.

It is an object of the present invention to overcome the above drawbacks by providing an electronically commutated or "brushless" electric motor having increased power density, higher efficiency and greater assembly easiness when compared with current motor technology, that is particularly suited for the application in servo systems.

It is a further object of this invention to develop a new magnetic circuit for said motor which is simpler, thus potentially less expensive, than those of the prior art.

The invention achieves the above objects through a brushless electric motor assembly as claimed in claim 1. Additional advantageous features are recited in the dependent claims.

The motor according to the invention provides for coils embracing individual teeth, in which each individual coil is wound on one stator tooth only.

The invention is founded upon the surprising discovery made by the Applicant that the loss of the magnetic field due to the longer tooth can be substantially suppressed by a matching slot opening, so that the actual face of the tooth - the length of which is the tooth pitch minus the slot opening - is approximately rendered as long as the magnet, thus avoiding the (magnetic) shorting thereof.

According to the invention, when the ratio m/n is lower than unity, but greater than a given value and the pole number is at least 10, a brushless motor can be realized in which the magnetic field loss is low. According to an actually preferred embodiment of the invention the ratio m/n is presently of about 0.6.

The invention counters the idea according to which winding arrangements with m/n <1 are to be considered as impracticable because if a single tooth carrying a coil is associated with a rotor having a magnet pitch shorter than the tooth pitch, the magnet would be partially short-circuited by the pole face on the side in which, owing to the greater length of the stator pole pitch vs magnet pitch, two opposite polarity magnets face the same tooth.

The invention will now be illustrated with reference to a preferred embodiment thereof in a rotary, circular form, but it can be applied also to linear constructions.

The invention will now be disclosed hereinbelow with reference to the accompanying drawings illustrating a preferred but non limiting embodiment thereof, in which:

Fig. 1 is a cross section view of a brushless electric motor assembly according to the present invention;

Fig. 2 shows a typical "tooth" structure adapted for carrying a single winding according to the present invention;

Fig. 3 is a perspective view showing a motor according to the invention, with two teeth removed to show the rotor part.

Throughout all the Figures the same references are used to indicate equal or functionally equivalent components. The invention will now described with reference to the Figures.

With reference to Fig.s 1 and 3, a brushless motor 1 according to the invention comprises a stator 2 and a rotor 3, which is mounted on a bearing system (not shown) and is therefore free to rotate on its longitudinal shaft B. The rotor 3 comprises an inner core 4 formed by a cylinder of ferromagnetic material carrying n permanent magnets M1, M2, ... Mn on its peripheral cylindrical surface, where n is an even number. These permanent magnets are disposed with successive alternate polarity, are radially oriented, and disposed so as to cover uniformly the ferromagnetic rotor structure.

According to the invention, the number n of the magnets - hereinafter referred to as the polarity or pole number of the motor - is to be selected from a well determined set of even numbers, and in the illustrated embodiment n =14. The set includes the following even numbers: 10, 14, 16, 22, 26, 28, etc., and integer multiples thereof.

The set further includes the following numbers: 4, 8, 12, 18 and integer multiples thereof, but a brushless motor built with such pole numbers would be less advantageous, as it will be explained later.

The rotor 3 is surrounded by a number of coil structures or inwardly projecting teeth T formed as stacklets of thin laminations, held together by interlocking, welding, riveting or gluing, which are then assembled to form a full stator after being wound.

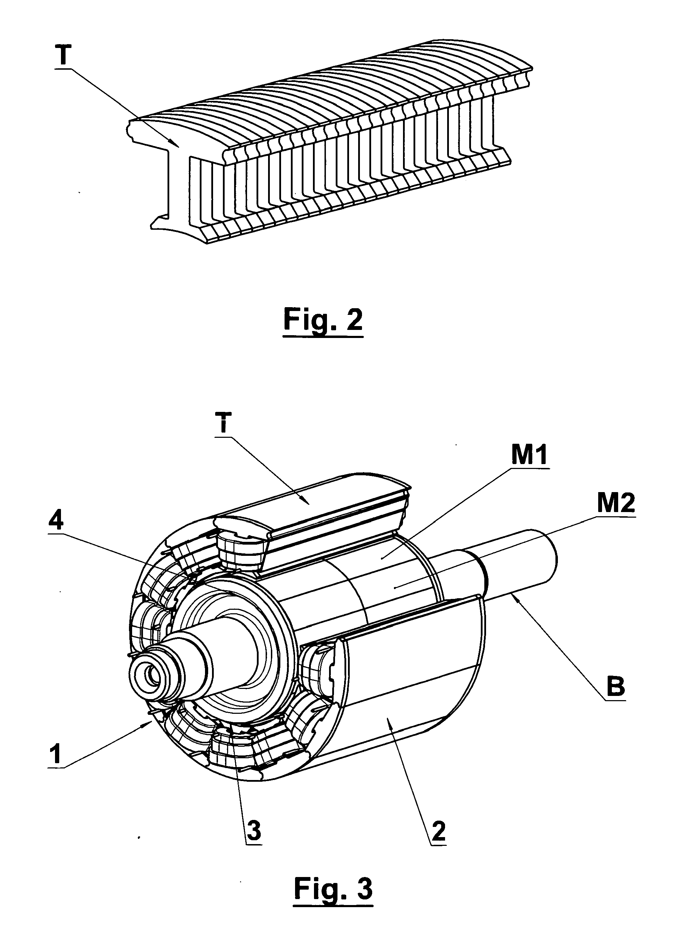

Alternatively, the stator teeth T can be realized as a single, laminated stator with slots on the inner periphery, and in which the coils are inserted in the stator through the inner slot opening which is completely smooth. In another embodiment, the stator teeth can be realized by pressed ferromagnetic powder, thus avoiding the stacking of many small laminations. Fig. 2 illustrates the construction of a tooth.

The number of such teeth is m, where m<n and furthermore m must be an integer multiple of the phase number, typically 3. In the illustrated embodiment, there are 14 teeth from T1 to T14 and an equal number of coils D1, ... D14.

Thus, in a motor according to the invention, and contrarily to the prior art motors, the coil pitch (that is the circumferential extension of the arc covered by a coil on the airgap diameter) is longer than the magnet pitch, (the circumferential extension of the magnet measured on the same diameter). In other words, each coil extends over an angular arc which is larger than that of a magnet.

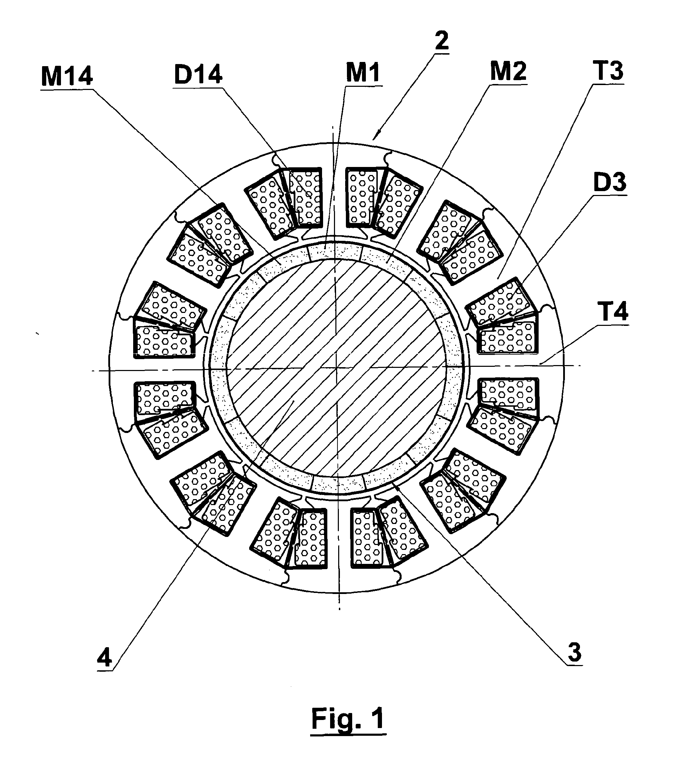

In the embodiment shown in Fig. 1, a 14 pole motor is realized with just 12 wound teeth. Each tooth, as represented in Fig. 2, is made up of a stacklet of laminations in order to be able to cope with the rapidly alternating magnetic field generated by the rotor rotation without incurring in excessive eddy current losses.

In the embodiment illustrated in Fig. 1, m=12 and n=14 so as to produce a balanced three phase motor according to the present invention.

More generally, m is lower than n, and is a multiple of 3, and pretty close to the value of n. Other suitable choices for m and n are: m=9, n=10; m=12, n=14, as well as m=18, n=20; this list being not exhaustive

The operation of a sub-fractional pole pitch winding can be better understood if each individual tooth, carrying its own winding, is modelled as an individual single phase generator. Two consecutive teeth are phase-displaced by 180 electrical degrees plus the electrical displacement entailed by the difference between the number of stator teeth and the number of rotor poles. With the aforementioned terminology, each consecutive tooth is phase displaced by an electric angle p given by

$$\rho = \pi.n/m$$

so that, in the example of Fig. 1, each individual winding is phase displaced with respect to the previous one by 210 electrical degrees, which can be simplified as (180+30) electrical degrees. Consequently, a phase winding U can be realized by connecting in series coils D1, D2, D7, D8 (where the underscore is used to describe a coil connected in antiseries, which realizes a "step" of 180 electrical degrees), so that, if coil D is taken as a phase reference, the phase U is a series of 4 coils with phase 0, 30, 0, 30 electrical degrees respectively, which result in a vector sum with a 15° phase and a winding factor given by

$$w.f.=(1 + \cos(30°)/2 = 0.933$$

The back EMF generated by any motor of this type is proportional to the flux coupled with each tooth, the winding factor of the winding, and the frequency of variation of said flux at a given speed, i.e. the pole number.

As indicate above, sub-fractional windings have always been discounted as impossible because a tooth pitch longer than the magnet pitch would shortcircuit the magnet causing a substantial loss of the magnetic flux when compared to conventional design.

Rather surprisingly the Applicant has discovered that in practice the tooth pitch can be shorter than the geometric value 2.π/m thanks to the spacing or slot opening which is left between each tooth of a pair, both with the aim of controlling the motor inductance and making the motor manufacturing easier. Moreover, as a matter of fact the magnetic field of the magnets is in fact shorter along the circumferential direction than the physical magnets and their geometric value 2π/n because where two poles touch the magnetic field is nullified by the interaction of the two opposite magnets for a short but significant length.

In view of the above, the Applicant feels that the occurrence of any shorting can be prevented by using a pretty small difference between the values of m and n, such as m=12, n=14, and a slot opening between two teeth equal or greater than 2/14 of the slot pitch, so that the actual width of the tooth face can be made exactly equal to the width of the magnet pole. In other words, in a brushless motor according to the invention the tooth collects all the available flux of the magnet, without any appreciable loss. These conditions are easily achieved in the manufacture of small to medium size motors.

In this case, when comparing two motors with same tooth number, e.g. a conventional fractional winding where m=12, n=8 and a sub-fractional winding with m=12, n=14, the same tooth collects the same amount of magnetic flux, but the pole number is much higher in the sub-fractional motor so the back EMF generated by the latter, and therefore its torque rating, is increased almost in the ratio 14/8 with all the remaining conditions being unchanged, thus realizing one of the objects of the invention.

At the same time, the brushless motor of the invention allows for using a lower number of coils in order to realize a given winding for the same polarity, and this provides for a simpler and more economic assembly, thus achieving another of the objects of the invention.

An additional advantage of the invention is that a large slot opening can be realized without loss of magnetic flux, which makes the motor winding and/or assembly procedure easier.

In the same way, phase V is realized by connecting in series coils D5, D6, D11, D12, while the phase W is obtained by serially connecting coils D3, D4, D9, D10.

Although the following is not to be meant as an explanation limiting the scope of the present invention, the Applicant believes that the field generated by the sides of the magnets that are not covered or coupled by the shorter teeth in a conventional fractional windings arrangement, is generally lost. In an arrangement according to the invention, all or most of the flux generated by the magnets would be recovered and this would account for the improved performance of a motor according to the invention.

The same technique can be employed advantageously in a linear motor, in which also the stator tooth pitch can be longer than the magnet pitch. In a linear brushless electric motor assembly according to the invention, the stator teeth are sequenced along a line, having longer pitch than the pitch of the rotor magnets, which are also equally spaced, and with alternate polarity. The tooth pitch - with respect to the magnet (or pole) pitch - is such as to displace all stator coils by an integer fraction of the pole pitch plus 180 electrical degrees whereby a balanced three phase stator winding can be assembled by summing the individual contributions of all stator teeth.

**Claims**

1. A three-phase brushless electric motor assembly comprising:

   - a rotor (3) carrying on its periphery n equally-spaced and radially-oriented permanent magnets (M1, .. Mn), with two adjacent magnets being of alternating polarities, wherein n is an even number;
   - a stator (2) surrounding said rotor (3) and equipped with m equally spaced inwardly projecting teeth (T1, T2, ... Tm), defining m slots with m being a multiple of 3, said stator comprising m stator coils (D1, D2, ... Dm) each coil embracing one tooth only, wherein m< n;

   said stator coils being series connected in groups to one another with alternate polarity, the number of said connection groups being equal to the number of motor phases, and each group comprising a number of coils arranged so as each group of coils forms one phase of a balanced poly-phase winding.

2. A brushless electric motor assembly as claimed in claim 1, **characterised in that** m is 9*k where k is any integer number, and n is 10*k.

3. A brushless electric motor assembly as claimed in claim 1, **characterised in that** m is 12*k where k is any integer number, and n is 14*k.

4. A brushless electric motor assembly as claimed in claims 1 to 3, **characterised in that** said stator teeth (T) are made of stacklets of thin laminations, held together by interlocking, welding, riveting or gluing, and then assembled to form a full stator after being wound.

5. A brushless electric motor assembly as claimed in the preceding claims, **characterised in that** said stator teeth are realized by pressed ferromagnetic powder.

6. A brushless electric motor assembly as claimed in the preceding claims, **characterised in that** said stator teeth (T) are realized as a single, laminated stator with slots on the inner periphery, and in which the coils are inserted in the stator through the inner slot opening which is completely smooth.

7. A linear three-phase brushless electric motor assembly comprising:

   a rotor carrying on its periphery n equally-spaced and radially-oriented permanent magnets, with two adjacent magnets being of alternating polarities, wherein n is an even number;

   - a stator facing said rotor and equipped with m equally spaced teeth, defining m slots with m being a multiple of 3, said stator comprising m stator coils, each coil embracing one tooth only, wherein m < n;

   said stator teeth being sequenced along a line, having a pitch that is longer than the pitch of the rotor magnets, which are also equally spaced, and with alternate polarity, the tooth pitch - with respect to the magnet, or pole, pitch - being such as to displace all stator coils by an integer fraction of the pole pitch plus 180 electrical degrees whereby each group of coils forms one phase of a balanced poly-phase winding.

**Fig. 1**

**Fig. 2**

**Fig. 3**

Europäisches
Patentamt

European
Patent Office

Office européen
des brevets

**EUROPEAN SEARCH REPORT**

Application Number

EP 08 42 5167

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 602 554 A (HITACHI LTD [JP]) 7 December 2005 (2005-12-07) * the whole document * | 1,2,4 | INV. H02K1/14 H02K3/28 H02K21/14 |
| X | EP 1 628 380 A (SANYO ELECTRIC CO [JP]) 22 February 2006 (2006-02-22) * the whole document * | 1,3,4 | ADD. H02K1/02 |
| X | EP 1 511 160 A (MATSUSHITA ELECTRIC IND CO LTD [JP]) 2 March 2005 (2005-03-02) * page 4, paragraph 20 - page 7, paragraph 36; figures 1-3; table 1 * | 1-3,6 | |

TECHNICAL FIELDS
SEARCHED      (IPC)

H02K

~~The present search report has been drawn up for all claims~~

| Place of search | Date of completion of the search | Examiner |
|---|---|---|
| Munich | 23 September 2008 | von Rauch, Marianne |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

**Application Number**

EP 08 42 5167

---

**CLAIMS INCURRING FEES**

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

**LACK OF UNITY OF INVENTION**

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-4, 6

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 08 42 5167

The Search Division considers that the present European patentapplication does not comply with the requirements of unity of invention and relates to severalinventions or groups of inventions, namely:

1. claims: 1-4,6

   3-phase motor comprising a permanent magnet rotor and outer laminated stator, whereby stator comprises single tooth coils, whereby more rotor poles as stator teeth/coils are provided

1.1. claims: 1-4

   3-phase motor comprising a permanent magnet rotor and outer laminated stator, whereby stator comprises single tooth coils, whereby more rotor poles as stator teeth/coils are provided and whereby stator core made out of spilt teeth

1.2. claim: 6

   3-phase motor comprising a permanent magnet rotor and outer laminated stator, whereby stator comprises single tooth coils, whereby more rotor poles as stator teeth/coils are provided and whereby stator core is made out of single annular laminations
   ---

2. claim: 5

   Stator core of a motor with permanent magnet rotor is composed out of split teeth made out of compressed ferro-magnetic powder
   ---

3. claim: 7

   Linear 3-phase motor comprising a permanent magnet mover and stator, whereby stator comprises single tooth coils and whereby more rotor poles as stator teeth/coils are provided
   ---

Please note that all inventions mentioned under item 1, although not necessarily linked by a common inventive concept, could be searched without effort justifying an additional fee.

## ANNEX TO THE EUROPEAN SEARCH REPORT
## ON EUROPEAN PATENT APPLICATION NO.

EP 08 42 5167

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2008

| Patent document cited in search report | | Publication date | Patent family member(s) | | Publication date |
|---|---|---|---|---|---|
| EP 1602554 | A | 07-12-2005 | JP | 2005348522 A | 15-12-2005 |
| | | | US | 2005269895 A1 | 08-12-2005 |
| | | | US | 2007222330 A1 | 27-09-2007 |
| EP 1628380 | A | 22-02-2006 | JP | 3672919 B1 | 20-07-2005 |
| | | | JP | 2006087283 A | 30-03-2006 |
| | | | US | 2006038458 A1 | 23-02-2006 |
| EP 1511160 | A | 02-03-2005 | CN | 1592034 A | 09-03-2005 |
| | | | JP | 2005073450 A | 17-03-2005 |
| | | | US | 2005046304 A1 | 03-03-2005 |

EPO FORM P0459

For more details about this annex : see Official Journal of the European Patent Office, No. 12/82

**EP 2 104 202 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1215029 A